(19) Europäisches Patentamt
European Patent Office
Office européen des brevets

(11) Publication number: **0 400 323 A2**

# (12) EUROPEAN PATENT APPLICATION

(21) Application number: 90107734.7

(22) Date of filing: 24.04.90

(51) Int. Cl.5: C08G 63/64, C08G 63/12

(30) Priority: 30.05.89 US 358966

(43) Date of publication of application: 05.12.90 Bulletin 90/49

(84) Designated Contracting States: DE ES FR GB IT NL

(71) Applicant: GENERAL ELECTRIC COMPANY
1 River Road
Schenectady New York 12305(US)

(72) Inventor: Bookbinder, Dana Craig
75 Pomeroy Avenue
Pittsfield, Massachusetts 01201(US)

(74) Representative: Catherine, Alain
General Electric France Service de Propriété Industrielle 18 Rue Horace Vernet
F-92136 Issy-Les-Moulineaux Cedex(FR)

## (54) Thermoplastic elastomer compositions.

(57) Block copolymers of polycarbonate resin and a polyester derived from a dimer fatty acid and a selected class of organic diol exhibit thermoplastic and elastomeric properties. They are useful compositions for molding articles such as automotive parts.

EP 0 400 323 A2

Xerox Copy Centre

# THERMOPLASTIC ELASTOMER COMPOSITIONS

## Background of the Invention

### Field of the Invention

The invention relates to copolymers of a polycarbonate and the polyester of a polymeric fatty acid and an organic diol.

### Brief Description of the Prior Art

The demand for custom-tailored plastics for specific purposes, particularly to meet specifications of the automotive industry has taxed the genius of the polymer chemist. One need has been for a thermoplastically moldable resin having strength characteristics associated with a polycarbonate resin, but with certain elastic properties not normally associated with polycarbonates. Modified polycarbonate resins have been made to meet this need, but they are not always satisfactory in every respect. For example, they are often colored or lack transparency.

The copolymers of the present invention are useful to thermoplastically mold articles such as automotive body parts and are characterized-in-part by transparency and an elasticity.

## Summary of the Invention

The invention comprises a thermoplastic, elastomer resin, which comprises; the block copolymer of

(A) an aromatic polycarbonate resin; and

(B) the polyester of

(i) a polymerized fatty acid; and

(ii) an organic diol selected from the group consisting of an aromatic diol, a cycloaliphatic diol and a branched chain aliphatic diol.

The copolymers of the invention are thermoplastically moldable elastomers useful to mold elastic, transparent articles such as automotive body parts.

## Detailed Description of the Preferred Embodiments of the Invention

The block copolymers of the invention may be prepared by the copolymerization of a polymeric fatty acid derived, acid group-terminated polyester with conventionally employed polycarbonate resin precursors. In other words, the polycarbonate-polyester copolymers of the invention comprise the polymerized reaction products of

(i) at least one dihydric phenol;

(ii) a carbonate precursor; and

(iii) a diacid polyester prepared by the polymerization of a polymeric fatty acid and an organic diol selected from the group consisting of an aromatic diol, a branched-chain aliphatic diol and a cycloaliphatic diol.

The polymerization conditions are those conventionally employed in the preparation of aromatic polycarbonate resins, with the added presence of an elasticity modifying proportion of the diacid polyester (iii) described above.

The copolymers of the invention may be prepared by the known general techniques for preparing aromatic polycarbonate resins. In general, the preparation may be carried out by interfacial polymerization or phase boundary separation, transesterification, solution polymerization, melt polymerization, interesterification, and like processes. Interfacial polymerization is preferred.

Polycarbonate resins and their method of preparation by interfacial polymerization are well known: see for example the details provided in the U.S. patents 3,028,365; 3,334,154; 3,275,601; 3,915,926; 3,030,331; 3,169,121; 3,027,814; and 4,188,314, all of which are incorporated herein by reference thereto.

In general, the method of interfacial polymerization comprises the reaction of a dihydric phenol with a

carbonyl halide (the carbonate precursor).

Although the reaction conditions of the preparative processes may vary, several of the preferred processes typically involve dissolving or dispersing the diphenol reactants in aqueous caustic, adding the resulting mixture to a suitable water immiscible solvent medium and contacting the reactants with the carbonate precursor, such as phosgene, in the presence of a suitable catalyst and under controlled pH conditions. The most commonly used water immiscible solvents include methylene chloride, 1,1-dichloroethane, chlorobenzene, toluene, and the like.

The catalyst employed accelerates the rate of polymerization of the dihydric phenol reactant with the carbonate precursor. Representative catalysts include but are not limited to tertiary amines such as triethylamine, quaternary phosphonium compounds, quaternary ammonium compounds, and the like. The preferred process for preparing polycarbonate resins of the invention comprises a phosgenation reaction. the temperature at which the phosgenation reaction proceeds may vary from below 0° C, to above 100° C. The phosgenation reaction preferably proceeds at temperatures of from room temperatures (25° C) to 50° C. Since the reaction is exothermic, the rate of phosgene addition may be used to control the reaction temperature. The amount of phosgene required will generally depend upon the amount of the dihydric phenol and the amount of any dicarboxylic acid also present.

Dihydric phenol reactants employed to prepare the copolymer resins of the invention are generally well known compounds as are methods of their prepara-tion. Representative of such dihydric phenols are phenolic diols of the general formula:-

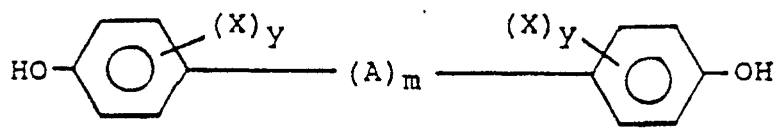

(I)

wherein A is selected from the group consisting of a divalent hydrocarbon radical containing from 1 to about 15 carbon atoms; a halogen substituted divalent hydrocarbon radical containing from 1 to about 15 carbon atoms and divalent groups such as:

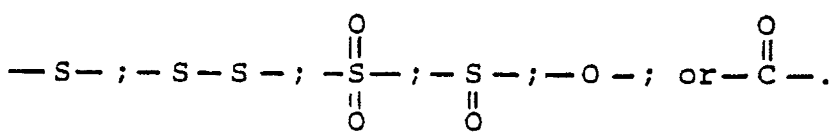

Each X in formula (I) is independently selected from the group consisting of halogen, hydrocarbyl such as an alkyl group of from 1 to about 8 carbon atoms; an aryl group of from 6-18 carbon atoms, an aralkyl group of from 7 to about 14 carbon atoms, an oxyalkyl group of from 1 to about 8 carbon atoms, and an oxyaryl group of from 6 to 19 carbon atoms; and wherein m is zero or 1 and y is a whole number integer of from 0 to 4, inclusive.

The term "hydrocarbyl" is used herein to mean a monovalent moiety obtained by removal of a hydrogen atom from a parent hydrocarbon, both branched and linear. Representative of hydrocarbyl are alkyl of 1 to 12 carbon atoms, inclusive, such as methyl, ethyl, propyl, butyl, pentyl, hexyl, heptyl, octyl, nonyl, undecyl, decyl, dodecyl, and the isomeric forms thereof; aryl of 6 to 12 carbon atoms, inclusive, such as phenyl, tolyl, xylyl, naphthyl, biphenyl, and the like; aralkyl of 7 to 12 carbon atoms, inclusive, such as benzyl, phenethyl, phenpropyl, phenbutyl, phenhexyl and the like; cycloalkyl of 3 to 8 carbon atoms, inclusive, such as cyclopropyl, cyclobutyl, cyclopentyl, cyclohexyl, cycloheptyl, cyclooctyl and the like.

Typical of some of the dihydric phenols that are advantageously employed are bis-phenols such as bis-(4-hydroxyphenyl) methane, 2,2-bis(4-hydroxy-3-methylphenyl)propane, 4,4-bis(4-hydroxyphenyl)heptane, 2,2-bis(4-hydroxy-3,5-dichlorophenyl)propane, 2,2-bis(4-hydroxy-3,5-dibromophenyl)propane; dihydric phenyl ethers such as bis(4-hydroxphenyl)ether, bis(3,5-dichloro-4-hydroxyphenyl)ether; dihydroxybiphenyls such as p,p′-dihydroxybiphenyl, 3,3′-dichloro-4,4′-dihydroxybiphenyl; dihydroxyaryl sulfones such as bis(4-hydroxyphenyl) sulfone, dihydroxy benzenes such as resorcinol and hydroquinone, halo- and alkylsubstituted dyhydroxy benzenes such as 1,4-dihydroxy-2,5-dichlorobenzene, 1,4-dihydroxy-3-methylbenzene; and dihydroxy biphenyl sulfides and sulfoxides such as bis(4-hydroxyphenyl)sulfide and bis(4-hydroxyphenyl)-sulfoxide. A variety of additional dihydric phenols are also available and are disclosed in U.S. Pat. Nos. 2,999,835; 3,028,365 and 3,153,008, all of which are incorporated herein by reference. It is, of course, possible to employ two or more different dihydric phenols or a combination of a dihydric phenol

with a glycol.

Preferred dihydric phenols of Formula (II) are the 4,4′-bisphenols.

The carbonate precursor employed in the preparation of resins of the present invention may be a carbonyl halide, a diarylcarbonate, or a bishaloformate. The carbonyl halides include carbonyl bromide, carbonyl chloride, and mixtures thereof. The bishaloformates include the bishaloformates of dihydric phenols such as bischloroformates of 2,3-bis(4-hydroxyphenyl)propane, hydroquinone, and the like; or the bischloroformates of glycols such as the bischloroformates of ethylene glycol, neopentylene glycol, polyethylene glycol, and the like. Typical of the diarylcarbonates which may be employed are diphenyl carbonate, and the di(alkylphenyl)-carbonates such as di(tolyl) carbonate. Some other non-limiting illustrative examples of suitable diarylcarbonates include di(naphthyl)carbonate, phenyl tolyl carbonate, and the like.

The preferred carbonate precursors are the carbonyl halides, with carbonyl chloride, also know as phosgene, being the preferred carbonyl halide.

The term "polycarbonate" as used herein is inclusive of copolyester-polycarbonates, i.e.: resin blocks which contain, in addition to recurring polycarbonate chain units of the formula:-

$$-\left[ O-D-O-\overset{O}{\overset{\|}{C}} \right]- \qquad (II)$$

wherein D is a divalent aromatic radical of the dihydric phenol employed in the polymerization reaction, repeating or recurring carboxylate units, for example of the formula:

$$\{O-\overset{O}{\overset{\|}{C}}-R^2-\overset{O}{\overset{\|}{C}}-O\} \qquad (III)$$

wherein $R^2$ is as defined below.

The polycarbonates containing copolyester-polycarbonate resin blocks are also prepared by interfacial polymerization technique, well known to those skilled in the art; see for example the U.S. patents 3,169,121 and 4,487,896.

In general the coplyester-polycarbonate resins are prepared as described above for the preparation of polycarbonate homopolymer blocks, but by the added presence of a difunctional carboxylic acid (ester precursor) in the water immiscible solvent.

In general, any difunctional carboxylic acid (dicarboxylic acid) conventionally used in the preparation of linear polyesters may be utilized in the preparation of the copolyester-carbonate resin blocks of the instant invention. Generally, the difunctional carboxylic acids which may be utilized include the aliphatic carboxylic acids, the aromatic carboxylic acids, and the aliphatic-aromatic carboxylic acids. These acids are well known and are disclosed for example in U.S. Pat. No. 3,169,121, which is hereby incorporated herein by reference. Representative of such difunctional carboxylic acids are difunctional carboxylic acids of the formula:-

$$R'\{R^2\}_q-COOH \qquad (IV)$$

wherein $R^2$ is an alkylene, alkylidene, or cycloaliphatic group; an alkylene, alkylidene or cycloaliphatic group containing ethylenic unsaturation; an aromatic group such as phenylene, biphenylene, and the like; two or more aromatic groups connected through non-aromatic linkages such as alkylene or alkylidene groups; and a divalent aralkyl radical such as tolylene, xylylene, and the like. R' is either a carboxyl or a hydroxyl group. The letter q represents one where R' is a hydroxyl group and either zero or one where R' is a carboxyl group.

Preferred difunctional carboxylic acids employed are the aromatic dicarboxylic acids, particularly useful aromatic dicarboxylic acids are those represented by the general formula:-

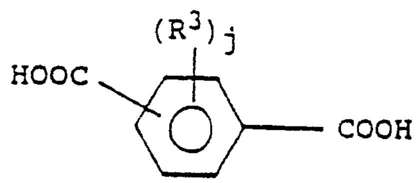

(V)

wherein j is a positive whole integer having a value of from 0 to 4 inclusive; and each $R^3$ is independently selected from the group consisting of alkyl radicals, preferably lower alkyl radicals (containing from 1 to about 5 carbon atoms).

Mixtures of these difunctional carboxylic acids may be employed as well as single acids. Therefore, where the term difunctional carboxylic acid is used herein it is to be understood that this term includes

mixtures of two or more different difunctional carboxylic acids as well as individual carboxlyic acids.

Most preferred as aromatic dicarboxylic acids are isophthalic acid, terephthalic acids, and mixtures thereof. A particularly useful difunctional carboxylic acid comprises a mixture of isophthalic acid and terephthalic acid wherein the weight ratio of terephthalic acid to isophthalic acid is in the range of from about 10:1 to about 0.2:9.8.

Rather than utilizing the difunctional carboxylic acid per se, it is possible, and sometimes even preferred, to employ the reactive derivatives of said acid. Illustrative of these reactive derivatives are the acid halides. The preferred acid halides are the acid dichlorides and the acid dibromides. Thus, for example, instead of using isophthalic acid, terephthalic acid or mixtures thereof, it is possible to employ isophthaloyl dichloride, terephthaloyl dichloride, and mixtures thereof.

The proportions of reactants employed to prepare the copolyester-carbonate resin blocks in the block (copolymers of the invention will vary in accordance with the proposed use of the product resin. Those skilled in the art are aware of useful proportions, as described in the U.S. patents referred to above. In general, the amount of the ester bonds may be from about 5 to about 90 mole percent, preferably from about 35 to about 80 mole percent, relative to the carbonate bonds. For example, 5 moles of bisphenol-A reacting completely with 4 moles of isophthaloyl dichloride and 1 mole of phosgene would give a copolyester-carbonate block of 80 mole percent ester bonds.

Also included within the scope of the instant invention are randomly branched polycarbonate resin blocks wherein a minor amount (typically between 0.05 and 2 mole percent, based on the quantity of dihydric phenol used) of a polyfunctional aromatic compound is a co-reactant with the dihydric phenol in the reaction mixture, comprising also the carbonate precursor and optionally the ester precursor; to provide a thermoplastic randomly branched polycarbonate. These polyfunctional aromatic compounds may be hydroxyl, carboxyl, carboxylic anhydride, haloformyl, or mixtures thereof. Some illustrative non-limiting examples of these polyfunctional compounds include trimellitic anhydride, trimellitic acid. trimellityl trichloride, 4-chloroformyl phthalic anhydride, pyromellitic acid, pyromellitic dianhydride, mellitic acid, mellitic anyhdride, trimesic acid, benzophenonetetracarboxylic acid, benzophenonetetracarboxylic acid anhydride, and the like. Other organic polyfunctional compounds useful in making randomly branched polycarbonate blocks are disclosed in U.S. Pat. Nos. 3,635.895 and 4,001,184, both of which are incorporated herein by reference.

In the conventional interfacial polymerization methods of preparing polycarbonates, a molecular weight regulator (a chain stopper) is generally added to the reaction mixture prior to or during the contacting with a carbonate precursor. Useful molecular weight regulators include, but are not limited to, monohydric phenols such as phenol, chroman-I, paratertiarybutylphenyl, p-cumylphenol and the like such as techniques for the control of molecular weight are well known in the art and may be used for controlling the molecular weight of the resins of the block copolymer present invention.

The diacid polyester (iii) block components of the copolymers of the invention are prepared by the polymerization of a polymeric fatty acid with a particular class of organic diols. Polymeric fatty acids are well known compounds, commercially available from a number of sources.

The term "polymeric fatty acid" as used herein means the polymeric fatty acids sometimes referred to in the art as "dimer acids". They are complex mixtures resulting from the polymerization of ethylenically unsaturated monobasic carboxylic acids having 16 to 22 carbon atoms or the lower alkyl esters thereof. The preferred aliphatic acids are the mono and polyolefinically unsaturated 18 carbon atom acids. Representative octadecenoic acids are 4-octadecenoic, 5-octadecenoic, 6-octadecenoic (petroselinic), 7-octadecenoic, 8-octadecenoic, cis-9-octadecenoic (oleic), trans-9-octadecenoic (elaidic), 11-octadecenoic (vaccenic), 12-octadecenoic and the like. Representative octadecadienoic acids are 9,12 octadecadienoic (linoleic), 9,11-octadecenoic, 10,12-octadecadienoic, 12,15-octadecadienoic and the like. Representative octadecatrienoic acids are 9,12,15-octadecatrienoic (linolenic), 6,9,12-octadeca trienoic, 9,11,13-octadecatrienoic (eleostearic), 10,12,14-octadecatrienoic (pseudo eleostearic) and the like. A representative 18 carbon atom acid having more than three double bonds is moroctic acid which is indicated to be 4,8,12,15-octadecatetraienoic acid. Representative of the less preferred (not as readily available commercially) acids are: 7-hexadecanoic, 9-hexadecanoic (palmitoleic), 9-eicosenoic (gadoleic), 11-eicosenoic, 6,10,14-hexadecatrienoic hiragonic), 4,8,12,16-eicosatetraenoic, 4,8,12,15,18-eicosapentanoic (timnodonic), 13-docosenoic (erucic), 11-docosenoic (cetoleic), and the like.

The ethylenically unsaturated acids can be polymerized using known catalytic or non-catalytic polymerization techniques; see for example the methods described in U.S. Patents 2,793,219 and 3,157,681. With the use of heat alone, the monoolefinic acids (or the esters thereof) are polymerized at a very slow rate while the polyolefinic acids (or the esters thereof) are polymerized at a reasonable rate. If the double bonds of the polyolefinic acids are in conjugated positions, the polymerization is more rapid than when they

are in the non-conjugated positions. clay catalysts are commonly used to accelerate the polymerization of the unsaturated acids. Lower temperatures are generally used when a catalyst is employed.

Representative of polymeric fatty acids are those commercially available from the polymerization of tall oil fatty acids. These polymeric fatty acids have a typical composition as follows:

| | % By Weight |
|---|---|
| $C_{18}$ monobasic acids (monomer) | 0-10 |
| $C_{36}$ dibasic acids (dimer) | 60-95 |
| $C_{54}$ and higher polybasic acids (trimer) | 1-35 |

The structure of the dimer and trimer acids has been described, for example, in the Encyclopedia of Chemical Technology, Second Edition, edited by Kirk-Othmer.

The relative ratios of monomer, dimer, and trimer in unfractionated polymeric fatty acids are dependent on the nature of the starting material and the conditions of polymerization.

A more detailed description and summary of the preparation of polymerized tall oil fatty acids can be found in U.S. Patents 3,377.303 and 4,776,983 the descriptions therein are incorporated herein by reference.

Preferred polymeric fatty acids used in the preparation of the polyesters (iii) are those having trimer acid contents of less than 5 percent by weight, most preferably less than 3 percent. Such preferred polymerized fatty acids are commercially available, for example Dimer-14, Union Camp Corporation, Wayne, New Jersey.

The most preferred polymeric fatty acid to prepare the polyester (iii) described above and used to make the copolymers of the invention are hydrogenated polymeric fatty acids. Methods of preparing the hydrogenated polymeric fatty acids are also well known; see for example the U.S. Patent 3.256.304. In general, the hydrogenation is accomplished using hydrogen under pressure in the presence of a hydrogenation catalyst. The catalysts generally employed in such hydrogenations are Ni, Co, Pt, Pd, Ah and others of the platinum family. In general, the catalyst is suspended on an inert carrier such as kieselguhr, commonly used with Ni and carbon. commonly used with platinum family of catalysts.

The preferred polyester (iii) may be prepared by polymerization of the polymeric fatty acid with a particular class of organic diols, using conventional and well known polymerization methods; see for example the methods of U.S. Patents 2,465.319 and 3,047,539.

In general, the polyester forming reactants are placed in a reactor vessel (which is sealed) and a nitrogen sweep is employed to remove any air as heating and stirring begin. The relative quantities of the reactants are selected so that substantially equivalent numbers of reactive carboxyl and hydroxyl groups or an excess of acid groups are present in the reaction mixture to produce a neutral or acid polyester. Venting is begun when the pressure reaches about 100-120 psig. or when the temperature reaches about 150 °C to 230 °C. When the pressure reaches atmospheric or 0 psig, the temperature is maintained at about 230 °C while sweeping with nitrogen for about one hour while removing water by distillation. To assist the polymerization, a polymerization catalyst may be added in a catalytic proportion. Representative of such catalysts are phosphoric acid and tin oxalate, manufactured by M & T Chemicals as FASCAT ® 2001. The reactor is slowly evacuated to about 10 mm with a nitrogen sweep. Vacuum is then broken with nitrogen and the polyester resin product is removed from the reactor.

Diols employed in the preparation are generally well known compounds, also available commercially. Representative of the preferred diols are the branched chain aliphatic, or cycloaliphatic diols having from 3-25, and preferably 15-20 carbon atoms. Representative of branched chain aliphatic diols are
2-isopropyl-1,3-butanediol;
2-isopropyl-1.4-butanediol;
2-(n-butyl)-1,3-propanediol;
2,2-diethyl-1,3-propanediol;
1,1,1-tris-(hydroxymethyl)-2-methylpropane;
5-methyl-2,4-heptanediol;
2-methyl-4,6-heptanediol;
2,5-dimethyl-2.5-hexanediol;
3,4-dimethyl-3,4-hexanediol;
2,2-dimethyl-3.5-hexanediol;

2-isobutyl-1,3-butanediol;
2-methyl-2-butyl-1,3-propanediol;
4-methyl-1,4-octanediol;
2-ethyl-2-butyl-1,3-propanediol;
2,8-diethyloctadecanediol and the like. A preferred class of aliphatic diols are those of the general formula:-

$$CH_3 \text{---}( CH_2 )_n\text{---} \underset{\displaystyle CH_2 - OH}{\underset{|}{CH}} \text{---}( CH_2 )_m\text{---} CH_2OH \qquad (IV)$$

wherein m and n each represent a whole number integer of 7 or 8 and the sum of m + n is 15.

Representative of cycloaliphatic diols are 1-(hydroxymethyl)-1-cyclobutanol
cis-1,2-cyclohexanediol
trans-1,2-cyclohexanediol
cis and trans-1,2-cyclohexanediols
cis-1,3-cyclohexanediol
trans-1,3-cyclohexanediol
cis-1,4-cyclohexanediol
trans-1,4-cyclohexanediol
1-methyl-1,2-cyclopentanediol
1-methyl-2,3-cyclopentanediol
1-methyl-1,2-cyclohexanediol
1-methyl-2,3-cyclohexanediol
1-methyl-3,4-cyclohexanediol
2-hydroxymethylcyclohexanol
3-hydroxymethylcyclohexanol
cis-4-hydroxymethylcyclohexanol
trans-4-hydroxymethylcyclohexanol
1,2-dimethyl-2,3-cyclopentanediol
cis-1,2-dimethyl-1,2-cyclohexanediol
1,1′-dihydroxy-1,1′-dicyclopentyl
1,1′-dihydroxy-1,1′-dicyclohexyl
and the like.

Aromatic diols may also be employed, such as for example
o-dihydroxybenzene (catechol)
m-dihydroxybenzene (resorcinol)
p-dihydroxybenzene (hydroquinone)
1,2,4-trihydroxybenzene
1,3,5-trihydroxybenzene (phloroglucinol)
o-hydroxybenzyl alcohol
m-hydroxybenzyl alcohol
p-hydroxybenzyl alcohol
1-phenyl-1,2-ethanediol
phthalyl alcohol
p-di-(hydroxymethyl)-benzene
1-phenyl-1,3-propanediol;
and the like.

Advantageously, the diacid polyester (iii) reactant employed in preparing the copolymers of the invention have a weight average molecular weight ($M_w$) of at least 1000, preferably between about 1000 to 120,000, as determined by gel permeation chromatography.

The relative proportion of polycarbonate chain units and the polyester chain units found in the polycarbonate-polyester block copolymer resins of the invention generally depend upon the amounts of polycarbonate precursor compounds and polyester used in the preparation of the copolymer. Thus, for example, if 10 weight percent of polyester polymer is used the resin will contain about 10 weight percent of polyester structural units in the polymer chain. any relative proportion of the polycarbonate and polyester

chain units may be found in the copolymer resins of the invention. Preferably, from 0.5 to 75 weight percent of the polyester polymer is used. At the higher proportion, the copolymer of the invention will exhibit increasing properties of elasticity as compared to copolymers made with lower proportions of the polyester block polymer.

Preferably, the proportion of polycarbonate blocks to polyester blocks will be in a weight percent ratio of from 40:60. Most preferably, the proportions will be 50 percent to 50 percent by weight.

The polycarbonate-polyester block copolymers of the instant invention described above may have a weight average molecular weight of from about 20,000 to about 200,000, preferably from about 30,000 to about 150,000 and an intrinsic viscosity, as measured in methylene chloride at 25 °C, of at least about 0.4 dl/gm, preferably from about 0.45 to about 1.40 dl/gm.

The polycarbonate-polyester block copolymers of the invention are useful as thermoplastic molding compositions. The moldable resins and resin compositions are useful to mold a wide variety of useful articles such as component parts of automobiles, tool housings and the like articles by conventional molding techniques including injection molding, solvent casting and the like procedures.

When employed as the active ingredient in a thermoplastic molding composition, the polycarbonate-polyester block copolymers of the instant invention may optionally have admixed therewith the commonly known and used processing or product additives such as, for example, antioxidants; antistatic agents; inert fillers such as glass, talc, mica, and clay; ultraviolet radiation absorbers such as the benzophenones, benzotriazoles, and cyanoacrylates; hydrolytic stabilizers such as the epoxides; color stabilizers such as the organophosphites; and flame retardants.

Some particularly useful flame retardants are the alkali and alkaline earth metal salts of organic sulfonic acids. These types of flame retardants are disclosed, inter alia, in U.S. patent Nos. 3,933,734; 3,948,851, 3,926,908; 3,919,167; 3,909,490; 3,953,396; 3,931,100; 3,978,024; 3,953,399; 3,917,559; 3,951,910 and 3,940,366, all of which are hereby incorporated herein by reference thereto.

It will be appreciated by those of ordinary skill in the art, from the above description of the preparation of the polycarbonate-polyester block copolymers of the invention, that those copolymers prepared by the interfacial polymerization process utilizing as the reactants (i) at least one dihydric phenol of Formula (I), (ii) a carbonate precursor, and (iii) a polyester obtained by the polymerization of a dimer fatty acid and an organic diol may be characterized-in-part by possession of recurring or repeating structural units of the formula:-

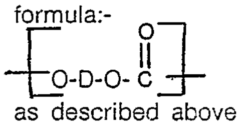 (II)

as described above and wherein D is a divalent aromatic radical of the dihydric phenol employed in the polymerization reaction.

The recurring or repeating units of the formula (II) are interrupted by at least one divalent moiety of the formula:-

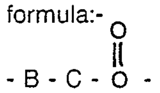

which represents the residue of the polyester (iii) described above.

Preferred block copolymers of the invention are colorless, or transparent.

The following examples and preparations describe the manner and process of making and using the invention and set forth the best mode contemplated by the inventor of carrying out the invention but are not to be construed as limiting the invention. where reported, the following tests were carried out:

Intrinsic Viscosity

The intrinsic viscosity was measured at a temperature of 25 °C methylene chloride and is reported in deciliters/gram (dl/g).

Glass Transition Temperature (Tg):

The glass transition temperatures were determined by using a Perkin-Elmer DSC-2B instrument which measures the glass transition temperature or (Tg) by differential scanning calorimetry.

Preparation of Polycarbonate-Polyester Block Copolymers

Example 1

A 100 ml four neck flask is fitted with a mechanical stirrer, a pH probe, an aqueous caustic inlet tube and a Claisen adapter to which there is attached a dry ice condenser and a gas inlet tube. The flask is charged with 400 ml of water, 600 ml of methylene chloride, 0.5 ml of triethylamine, 0.69 gm (0.00548 moles; 2.0 molar percent of p-tertiary-butylphenol), 50.0 gm (0.015) moles) of a polyester polymer ($M_w$ = 5000) prepared by polymerization of a tall oil dimer fatty acid with a branched chain aliphatic diol (9-methyloloctadecanol of the formula VI); and 50.0 gm (0.219 moles) of bisphenol-A. With stirring, phosgene is introduced into the flask t a rate of 0.75 g/min. for 39.3 minutes with the pH maintained in a range of 10.5 to 11.5 by addition of 50% aqueous sodium hydroxide. The resin layer is then separated from the brine layer, washed once with 400 ml of 5 wt. percent aqueous HC1, then three times with distilled water. The resin is then precipitated into methanol in a Waring blender and washed with methanol. The dried resin so obtained is characterized by an intrinsic viscosity of 0.70 dl/g, a Tg of -55° C. and 138° C. The resin is useful as a molding resin to prepare exterior components of automobiles. A representative sample compression molded at 520° C. is a clear elastomeric film with a useful tear strength.

Example 2

The procedure of Example 1, supra., is repeated except the p-tertiary-butylphenol as used therein is left out. The resin obtained has an intrinsic viscosity of 0.81 dl/g. A sample compression molded yields a clear elastomeric film.

## Claims

1. A thermoplastic, elastomeric resin, which comprises;
the block copolymer cf
(A) an aromatic polycarbonate resin; and
(B) the polyester of
(i) a polymerized fatty acid; and
(ii) an organic diol selected from the group consisting of an aromatic diol, a cycloaliphatic diol and a branched chain aliphatic diol.
2. The resin of claim 1 wherein the fatty acid is a tall oil fatty acid.
3. The resin of claim 1 wherein the diol is a branched chain aliphatic diol.
4. The resin of claim 3 wherein the diol is selected from those of the formula:-

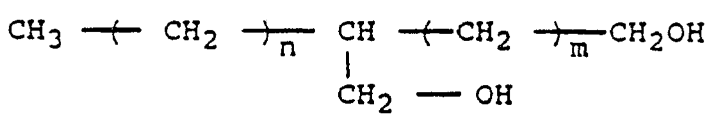

wherein m and n are each whole number integers of 7 or 8 and the sum of m + n is 15.
5. The resin of claim 1 wherein the polyester has a weight average molecular weight of between about 1000 and 120,000 as determined by gel permeation chromatography.
6. A transparent article molded from the resin of claim 1.